# EUROPEAN PATENT APPLICATION

(11) **EP 4 837 798 A1**
(43) Date of publication of application: **11.11.2026**
(21) Application number: 25175424.8
(22) Date of filing: 09.05.2025
(51) Int. Cl.: B60T 8/36, F16K 27/12, B60T 17/00

(54) **COVER FOR A VALVE UNIT FOR MODULATING PRESSURE IN A PNEUMATIC BRAKING SYSTEM OF A VEHICLE**

(71) Applicant: ZF CV Systems Europe BV, 1170 Brüssel (BE)
(72) Inventor: WEIN, Mateusz, Kunice (PL); STACHOWIAK, Pawel, Wroclaw (PL); DREYER, Werner, 30826 Garbsen (DE); BIALON, Rafal, 55-200 Godzikowice (PL)
(74) Representative: Rabe, Dirk-Heinrich

(57) **Abstract**

Cover (110) for a valve unit (100) for modulating pressure in a pneumatic braking system (210) of a vehicle (200a), in particular utility vehicle (200b); wherein the cover (110) comprises a base member (115) for contacting a body (105) of the valve unit (100); the cover (110) comprises a distal member (120); the cover (110) comprises a plurality of ribs (125); the plurality of ribs (125) is arranged between the base member (115) and the distal member (120); the plurality of ribs (125) supports the distal member (120) distantly from the base member (115); the cover (110) comprises a plurality of draining channels (130); wherein the plurality of draining channels (130) is arranged between the base member (115) and the distal member (120); and the plurality of draining channels (130) is formed by the plurality of ribs (125).

## Description

The disclosure relates to a cover for a valve unit for modulating pressure in a pneumatic braking system of a vehicle, in particular utility vehicle. Furthermore, the disclosure relates to a valve unit for modulating pressure in a pneumatic braking system of a vehicle, in particular utility vehicle, to a pneumatic braking system of a vehicle, in particular utility vehicle, and to a vehicle, in particular utility vehicle.

Such a valve unit is known in the prior art. For example, such a valve unit may be configured as a solenoid valve and may be used in a pneumatic braking system for a rapid and reliable actuation of pneumatic brakes.

WO 2024/110030 A1 discloses a solenoid valve for pneumatic applications for a vehicle, in particular utility vehicle, wherein said fluid valve comprises: an inner valve core extending along a longitudinal axis, valve plate displaceable between a basic position and an activated position, for closing and opening at least one valve seat, an outer yoke, a valve connection body with an inlet channel extending along the longitudinal axis, a spring for biasing said valve plate into its basic position, and an electromagnetic coil to be energized for creating a magnetic circuit flowing through said inner valve core, said outer yoke and said valve plate, for switching the valve plate into said activated position, wherein the valve inlet channel comprises at least three guiding ribs arranged around or at an outer cylindrical surface of the valve inlet channel and being distributed along a circumference of the valve inlet channel, wherein the at least three guiding ribs and an inner guiding contour of an annular protrusion of the valve plate are adapted to enable a vertical alignment of the valve plate with respect to the valve inlet channel when a linear displacement of the valve plate occurs due to an energization of the electromagnetic coil.

Therein, splash water and/or moisture may become relevant, in particular at temperatures below 0°C when the water freezes and expands. An expansion of water that is trapped may damage a component that contains the water. In particular, damage of a cover of such a valve unit may lead to an insufficient coverage of a body of the valve unit.

In order to reduce the amount of water, a volume in which the water may be contained may be reduced.

US 2005/035319 A1 discloses that a solenoid cover includes a solenoid valve housing chamber housing of solenoid valves that project outwards from a hydraulic unit housing and a lower space therebelow. An upper volume reduced portion is disposed upper side of a solenoid valve position region. Since the upper volume reduced portion is formed such that a part of the partition protrudes toward the hydraulic unit housing, a volume of the upper space, which is sandwiched between the upper volume reduced portion and the hydraulic unit housing, becomes extremely small. Accordingly, the total volume of the solenoid valve housing chamber is reduced by providing the upper volume reduced portion and the absolute amount of water to be entered reduces. A height level of the water that is entered in the solenoid valve housing chamber is suppressed.

Furthermore, it is known that water may be discharged through a vent due to gravity and pressure.

US 7,040,720 B2 discloses that a solenoid cover includes a solenoid valve housing chamber housing solenoids of solenoid valves that project outwards from a hydraulic unit and a lower space therebelow. Two labyrinth portions with a fluid passage formed by a plurality of partition plates and communication holes are provided so as to be symmetrical with each other in a left-right direction below the lower space. An air vent communicates with the outside and which serves as a water drain is provided below each labyrinth portion. When a pressure in the solenoid valve housing chamber becomes negative due to a temperature decrease, water flows through the air vent at a high flow rate. Then, the water entering through the upper communication hole flows down along the partition plate toward the lower communication hole, which easily enables the water to be drained to the outside.

However, the reduction of volume may not always be applicable and/or may not lead to a total avoidance of water. Draining the water through an air vent may, due to geometrical reasons, also not always be applicable. Further solutions to avoid damage by freezing water may compromise a reinforcement of relevant components of the valve unit by sheet metal. However, this may be cost-intensive and also not always be applicable.

The problem of the disclosure is to provide a technological contribution to the art. A specific embodiment of the present disclosure may solve the problem of providing a valve unit which enables water drainage, which maintains mechanical strength and avoids specific geometric requirements.

This problem is solved by the subject matter of the independent claims. The dependent claims describe preferred further developments.

According to the disclosure, a cover for a valve unit for modulating pressure in a pneumatic braking system of a vehicle, in particular utility vehicle, is provided; wherein the cover comprises a base member for contacting a body of the valve unit; the cover comprises a distal member; the cover comprises a plurality of ribs; the plurality of ribs is arranged between the base member and the distal member; the plurality of ribs supports the distal member distantly from the base member; the cover comprises a plurality of draining channels; wherein the plurality of draining channels is arranged between the base member and the distal member; and the plurality of draining channels is formed by the plurality of ribs.

The disclosure provides an alternative cover. The cover comprises the base member and the distal member, which are separated from each other via the ribs. The ribs form draining channels, i.e., the draining channels are geometrically defined and/or delimited by the ribs. The draining channels may be oriented horizontally so that a water accumulation may drain out of the draining channels and may not accumulate further between the base member and the distal member. The draining channels may enable water that freezes within the channel to expand without the exertion of destructive forces on the base member and/or the distal member.

Further, the ribs provide stiffness of the cover. The ribs may interconnect the base member and the distal member and thus support the distal member reliably. The arrangement of the ribs may suffice to provide mechanical strength without the need for metal reinforcement.

The disclosure provides an efficient solution that allows to maintain the required outer dimensions of the distal member and thus of the complete cover and/or of the complete valve unit while achieving sufficient structural strength. This solution enables water drainage to avoid "water traps" which can cause damage and/or destruction of the cover at temperatures below 0°C.

Optionally, the base member comprises an outer surface; and the plurality of draining channels is formed by the outer surface. I.e., the draining channels are geometrically defined and/or delimited by the outer surface. The outer surface of the base member may, in a mounted position of the valve unit, be oriented horizontally and/or essentially horizontally. Optionally, the outer surface may comprise a curvature so that water may drain from the outer surface. The outer surface of the base member faces the distal member, in particular an outer surface thereof.

Optionally, the distal member comprises an inner surface; and the plurality of draining channels is formed by the inner surface. I.e., the draining channels are geometrically defined and/or delimited by the inner surface. The inner surface of the distal member faces the base member, in particular an outer surface thereof.

Optionally, the base member is arranged parallel to the distal member. This may enable a space-saving construction of the cover and maintain a sufficient functioning of the draining channels to drain water.

Optionally, the cover comprises mounting openings for receiving mounting members for mounting the cover to the body; and the mounting openings and the plurality of draining channels are separated from each other by at least one of the plurality of ribs. This may achieve that the cover may be mounted, irrespective of the arrangement of the draining channels. This may avoid water flowing into the mounting openings and thus may prevent corrosion of the mounting members.

Optionally, each of the plurality of draining channels defines a draining direction; and the draining direction of one of the plurality of draining channels is parallel to the base member and/or perpendicular to the respective one or more ribs. The draining direction may be defined by a principal flow direction of water that may flow through the draining channels. The orientation of the draining direction achieves a reliable drainage. The draining channels may be oriented horizontally.

Optionally, a first distance between the base member and the distal member is more than 2 mm, optionally more than 5 mm. This may balance requirements for a space-saving construction of the cover and for sufficient drainage.

Optionally, a second distance between an adjacent pair of the plurality of ribs is more than 2 mm, optionally more than 5 mm. This may balance requirements for a space-saving construction of the cover and for sufficient drainage.

Optionally, each of the plurality of draining channels comprises at least one opening for fluid communication between the respective draining channel and a surrounding of the cover and/or of the valve unit. This achieve that water may be drained out of the fluid channel. I.e., the accumulation of water may be reduced and/or prevented.

Optionally, the cover is formed in one piece. This may provide a particularly cost-effective cover. Therein, the base member, the distal member and the ribs may be formed in one piece.

Optionally, the cover is made of plastics. This may provide a particularly cost-effective cover that is resistant against corrosion due to water.

According to an aspect of the disclosure, a valve unit for modulating pressure in a pneumatic braking system of a vehicle, in particular utility vehicle, is provided, wherein the valve unit comprises: a body; and a cover according to the disclosure; wherein the body and the cover are mounted to each other. Optionally, the cover comprises one or more of the optional and/or preferred features to achieve a corresponding technical effect.

Optionally, the valve unit is configured as a solenoid valve. The solenoid valve may particularly effectively be protected by the cover. The cover may prevent damage of the solenoid valve due to water ingress and/or freezing water.

According to an aspect of the disclosure, a pneumatic braking system of a vehicle, in particular utility vehicle, is provided. The pneumatic braking system comprises the valve unit according to the disclosure. Optionally, the valve unit and/or the cover of the valve unit comprises one or more features as described as optional and/or preferred to achieve a technical effect corresponding thereto.

According to an aspect of the disclosure, a vehicle, in particular utility vehicle, is provided. The vehicle, in particular utility vehicle, comprises the pneumatic braking system according to the disclosure and/or the valve unit according to the disclosure. Optionally, the pneumatic braking system, the valve unit and/or the cover of the valve unit comprises one or more features as described as optional and/or preferred to achieve a technical effect corresponding thereto.

The disclosure is hereinafter described in detail with reference to the appended drawings, in which:
Fig. 1 shows a schematic of a vehicle, in particular utility vehicle, according to an embodiment of the disclosure;
Fig. 2 shows a perspective view of a valve unit according to an embodiment of the disclosure;
Fig. 3 shows a perspective view of a cover of a valve unit; and
Fig. 4 shows a perspective view of a cover of a valve unit according to an embodiment of the disclosure.

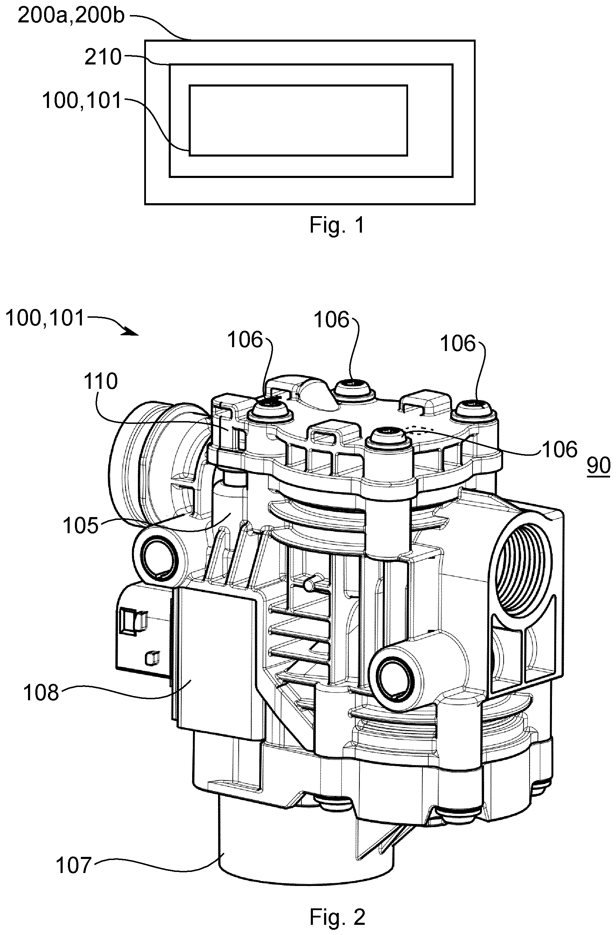

Figure 1 shows a schematic of a vehicle 200a, in particular utility vehicle 200b, according to an embodiment of the disclosure. In the following, the vehicle 200a, in particular utility vehicle 200b, is referred to as vehicle 200a, 200b. The vehicle 200a, 200b is a land vehicle 200a, 200b. For example, the vehicle 200a, 200b is a truck, a bus, a trailer, and/or a vehicle of a vehicle combination.

The vehicle 200a, 200b comprises a pneumatic braking system 210. The pneumatic braking system 210 comprises pneumatic and optionally electric components. For example, a brake request by a driver and/or operator of the vehicle 200a, 200b may lead to a brake signal that causes a pneumatic and/or an electro-pneumatic actuation of the pneumatic braking system 210. Therein, pressurized air is provided and controlled to actuate the pneumatic braking system 210 to brake the vehicle 200a, 200b.

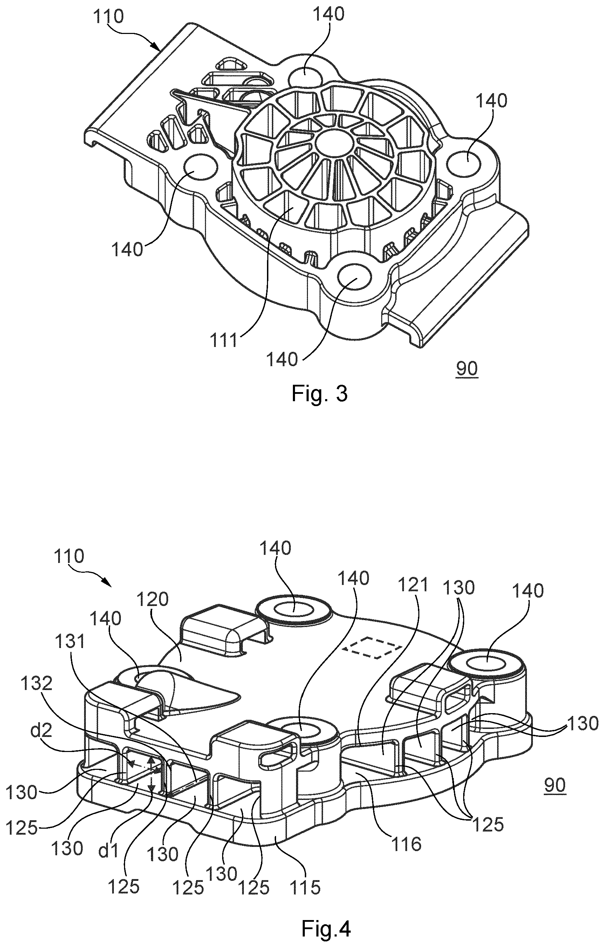

The pneumatic braking system 210 comprises a valve unit 100. The valve unit 100 and its components is further described with reference to Figures 2 and 4. Figure 3 illustrates a cover 110 according to the prior art.

Figure 2 shows a perspective view of a valve unit 100 according to an embodiment of the disclosure. The valve unit 100 of Figure 2 is a valve unit 100 for modulating pressure in a pneumatic braking system 210 of a vehicle 200a, in particular utility vehicle 200b. Such a vehicle 200a, 200b and pneumatic braking system 210 are described with reference to Figure 1. Figure 2 is described under reference to Figure 1.

The valve unit 100 is configured as a solenoid valve 101. I.e., the valve unit 100 is adapted to use an electromagnetic field to control flow of pressurized air. Therein, the valve unit 100 comprises a solenoid unit 108, also called coil unit. The solenoid unit 108 is adapted to achieve a displacement of a valve plate between a basic position and an activated position, for closing and opening at least one valve seat. A spring may be provided for biasing the valve plate into its basic position. An electromagnetic coil is adapted to be energized for creating an electromagnetic field flowing through an inner valve core, an outer yoke and the valve plate, for switching the valve plate into said activated position.

The valve unit 100 of Figure 2 comprises a body 105. The body 105 may house functionally relevant components as described above. The body 105 comprises several ports (not indicated), e.g., a delivery port, a supply port and an exhaust port.

The valve unit comprises a cover 110 and a second cover 107. The body 105 and the cover 110 are mounted to each other. The second cover 107 and the body 105 are mounted to each other. Each of the cover 110 and the second cover 107 covers the body 105 and is adapted to shield the body 105 and components housed within the body 105 from a surrounding 90 of the valve unit 100. Optionally, a gasket (not shown) may be arranged between the body 105 and the cover 110 and/or between the body 105 and the second cover 107.

Figure 3 illustrates a potential orientation of the valve unit 110 in a mounted state.

A cover 110 according to the prior art is shown in Figure 3. Figure 4 illustrates a cover 110 according to the disclosure.

Figure 3 shows a perspective view of a cover 110 of a valve unit 100. Therein, Figure 3 illustrates a top of the cover 110, wherein top relates to an orientation of the cover 110 in the mounted state. The cover 110 comprises a plurality of cavities 111. Water may be arranged in each of the cavities 111. Due to geometrical reasons and the effect of gravity, water may not drain out of the cavities 111. Water which remains in the cavities 111 may damage the cover 110.

Figure 4 shows a perspective view of a cover 110 of a valve unit 100 according to an embodiment of the disclosure. The cover 110 of Figure 2 is a cover 110 for a valve unit 100 for modulating pressure in a pneumatic braking system 210 of a vehicle 200a, in particular utility vehicle 200b. Such a vehicle 200a, 200b, pneumatic braking system 210 and valve unit 100 are described with reference to Figures 1 and 2.

Figure 4 is described under reference to Figures 1 and 2. Therein, Figure 4 illustrates a top of the cover 110, wherein top relates to an orientation of the cover 110 in the mounted state.

The cover 110 comprises a base member 115 for contacting a body 105 of the valve unit 100. For contacting the body 105, the base member 115 may comprise an essentially flat lower surface (not shown) and/or may be adapted to receive a gasket (not shown).

The cover 110 comprises a distal member 120. The distal member 120 may form a top portion of the cover 110 and/or of the valve unit 100.

The cover 110 comprises a plurality of ribs 125. The ribs 125 are integrally formed with the cover 110. The plurality of ribs 125 is arranged between the base member 115 and the distal member 120. I.e., each of the ribs 125 is arranged between the base member 115 and the distal member 120. The plurality of ribs 125 supports the distal member 120 distantly from the base member 115. Thus, the ribs 125 provide mechanical strength of the cover 110. A force that may be exerted on the distal member 120 may be transferred via the ribs 125 to the base member 115.

The cover 110 comprises mounting openings 140 for receiving mounting members 106 (see Figure 2) for mounting the cover 110 to the body 105. The mounting openings 140 may be through holes. The mounting members 106 may be screws. In the mounted state, the mounting members 106 project through the mounting openings 140 and are received and fixated by the body 105.

The base member 115 is arranged parallel to the distal member 120. Each of the base member 115 and the distal member 120 is essentially flat. Each of the base member 115 and the distal member 120 is, in the mounted state, oriented horizontally.

The distal member 120 comprises an inner surface 121. In the mounted state, the inner surface 121 faces downwards. The base member 115 comprises an outer surface 116. In the mounted state, the outer surface 116 faces upwards. The inner surface 121 and the outer surface 116 face each other.

The cover 110 comprises a plurality of draining channels 130. The draining channels 130 are provided by elongated volumes that are formed by the cover 110. The draining channels 130 are adapted to achieve water drainage and/or enable an expansion of potentially accumulated water. The plurality of draining channels 130 is formed by the plurality of ribs 125. I.e., the ribs 125 delimit the draining channels 130 vertically. Ribs 125 may separate draining channels 130 from each other. The plurality of draining channels 130 is formed by the outer surface 116. I.e., a lower portion of the draining channels 130 is formed by the outer surface 116. The plurality of draining channels 130 is formed by the inner surface 121. I.e., an upper portion of the draining channels 130 is formed by the inner surface 121. The draining channels 130 are formed by and/or geometrically defined by the ribs 125, the inner surface 121 and the outer surface 116.

The mounting openings 140 and the plurality of draining channels 130 are separated from each other by at least one of the plurality of ribs 125. I.e., each of the mounting openings 140 is separated from the draining channels 120 by at least one of the plurality of ribs 125. The mounting openings 140 may at least partially geometrically defined by the ribs 125.

Each of the plurality of draining channels 130 defines a draining direction 131. The draining direction 131 defines a potential principal flow direction. The draining direction 131 of one of the plurality of draining channels 130 is parallel to the base member 115 and perpendicular to the respective one or more ribs 125. Each of the plurality of draining channels 130 comprises at least one opening 132 for fluid communication between the respective draining channel 130 and a surrounding 90 of the cover 110 and/or of the valve unit 100. The draining direction 131 is arranged so that water may be transported to the openings 132 and to flow out of the openings 132.

A first distance d1 between the base member 115 and the distal member 120 is more than 2 mm, optionally more than 5 mm. A second distance d2 between an adjacent pair of the plurality of ribs 125 is more than 2 mm, optionally more than 5 mm.

The cover 110 is formed in one piece. I.e., the components of the cover 110 are integrally formed. The cover 110 is made of plastics.

### List of reference signs (part of the description)

- 90: surrounding
- 100: valve unit
- 101: solenoid valve
- 105: body
- 106: mounting member
- 107: second cover
- 108: solenoid unit
- 110: cover
- 111: cavities
- 115: base member
- 116: outer surface
- 120: distal member
- 121: inner surface
- 125: rib
- 130: draining channel
- 131: draining direction
- 132: opening
- 140: mounting opening

- 200a: vehicle
- 200b: utility vehicle

- 210: pneumatic braking system

- d1: first distance
- d2: second distance

## Claims

1. Cover (110) for a valve unit (100) for modulating pressure in a pneumatic braking system (210) of a vehicle (200a), in particular utility vehicle (200b); wherein
- the cover (110) comprises a base member (115) for contacting a body (105) of the valve unit (100);
- the cover (110) comprises a distal member (120);
- the cover (110) comprises a plurality of ribs (125);
- the plurality of ribs (125) is arranged between the base member (115) and the distal member (120);
- the plurality of ribs (125) supports the distal member (120) distantly from the base member (115);
- the cover (110) comprises a plurality of draining channels (130); wherein
- the plurality of draining channels (130) is arranged between the base member (115) and the distal member (120); and
- the plurality of draining channels (130) is formed by the plurality of ribs (125).

2. Cover (110) as claimed in claim 1, wherein
- the base member (115) comprises an outer surface (116); and
- the plurality of draining channels (130) is formed by the outer surface (116).

3. Cover (110) as claimed in claim 1 or 2, wherein
- the distal member (120) comprises an inner surface (121); and
- the plurality of draining channels (130) is formed by the inner surface (121).

4. Cover (110) as claimed in any one of the preceding claims, wherein the base member (115) is arranged parallel to the distal member (120).

5. Cover (110) as claimed in any one of the preceding claims, wherein
- the cover (110) comprises mounting openings (140) for receiving mounting members (106) for mounting the cover (110) to the body (105); and
- the mounting openings (140) and the plurality of draining channels (130) are separated from each other by at least one of the plurality of ribs (125).

6. Cover (110) as claimed in any one of the preceding claims, wherein
- each of the plurality of draining channels (130) defines a draining direction (131); and
- the draining direction (131) of one of the plurality of draining channels (130) is parallel to the base member (115) and/or perpendicular to the respective one or more ribs (125).

7. Cover (110) as claimed in any one of the preceding claims, wherein a first distance (d1) between the base member (115) and the distal member (120) is more than 2 mm, optionally more than 5 mm.

8. Cover (110) as claimed in any one of the preceding claims, wherein a second distance (d2) between an adjacent pair of the plurality of ribs (125) is more than 2 mm, optionally more than 5 mm.

9. Cover (110) as claimed in any one of the preceding claims, wherein each of the plurality of draining channels (130) comprises at least one opening (132) for fluid communication between the respective draining channel (130) and a surrounding (90) of the cover (110) and/or of the valve unit (100).

10. Cover (110) as claimed in any one of the preceding claims, wherein the cover (110) is formed in one piece.

11. Cover (110) as claimed in any one of the preceding claims, wherein the cover (110) is made of plastics.

12. Valve unit (100) for modulating pressure in a pneumatic braking system (210) of a vehicle (200a), in particular utility vehicle (200b), wherein the valve unit (100) comprises:
- a body (105); and
- a cover (110) as claimed in any one of the preceding claims; wherein
- the body (105) and the cover (110) are mounted to each other.

13. Valve unit (100) as claimed in claim 12, wherein the valve unit (100) is configured as a solenoid valve (101).

14. Pneumatic braking system (210) for a vehicle (200a), in particular utility vehicle (200b), comprising the valve unit (100) as claimed in claim 12 or 13.

15. Vehicle (200a), in particular utility vehicle (200b), comprising the pneumatic braking system (210) as claimed in claim 14 and/or the valve unit (100) as claimed in claim 12 or 13.
